# EUROPEAN PATENT SPECIFICATION

(11) **EP 2 954 237 B1**
(45) Date of publication and mention of the grant of the patent: **06.09.2017**
(21) Application number: 14703579.4
(22) Date of filing: 07.02.2014
(51) Int. Cl.: F16J 15/06, F16J 15/10, F16L 15/04, F16L 29/00, F16L 55/11

(54) **SEAL COUPLING SYSTEM FOR VALVE**
DICHTUNGSKUPPLUNGSSYSTEM FÜR EIN VENTIL
SYSTÈME DE COUPLAGE ÉTANCHE POUR VALVE

(30) Priority: 07.02.2013 IT MI20130042 U
(43) Date of publication of application: 16.12.2015
(73) Proprietor: Caleffi S.p.A., 28010 Fontaneto d'Agogna, Novara (IT)
(72) Inventor: CALEFFI, Marco, I-28010 Fontaneto d'Agogna (IT)
(74) Representative: Candito, Rocco
(86) International application number: PCT/EP2014/052435
(87) International publication number: WO 2014/122265

(56) References cited:
- EP-A2- 1 785 656
- DD-A1- 152 397
- DE-A1- 2 230 740
- DE-A1- 2 237 351
- DE-A1-102006 015 263
- DE-U1- 9 204 534

## Description

### BACKGROUND OF THE INVENTION

The present invention relates to an improved seal coupling system for a valve of the type that is couplable by threading with a plant containing a running fluid, in particular a thermal plant, the valve comprising an air-vent valve or a safety relief valve or other type of valve. The new seal coupling system according to the invention is highly effective in sealing fluid in the connecting zone between the valve and a plant connection. Further, the constructional features make the new seal coupling system highly versatile and suitable for any type/geometry of threaded fitting provided on the piping of the thermal plant, with consequent advantages in terms of assembly costs.

### PRIOR ART

Air vent valves are known that are fitted on a hydraulic heating plant, in particular along piping of the latter, prevalently via different types of threaded coupling systems. According to a first type of coupling, a threaded fitting protrusion of the body of the valve engages in a threaded fitting seat obtained in the pipe by interposing therebetween a toroidal gasket, or seal ring having a circular cross-section, i.e. a seal of the so-called "O-ring" type. The "O-ring" seal ring requires, for correct operation, a suitably shaped housing seat. In other words, the housing seat for the O-ring, defined by the cooperation between the threaded fitting protrusion and the threaded fitting seat of the connection must have a very precise geometry, i.e. it is necessary that also the threaded fitting seat has a well-defined geometrical configuration in such a manner that in the tightened configuration the "O-ring" is subjected to the correct level and type of compression, i.e. works in the correct manner. Obviously, as not all fitting seats of the connections are suitably configured to receive an "O-ring" gasket, this implies a limit to the assembly versatility of a valve.

According to a second type of coupling, a flat annular seal, i.e. a seal having a substantially rectangular cross section, is interposed between the aforesaid threaded fitting protrusion of the valve body and the threaded fitting seat of the piping. Also this solution entails some drawbacks; in fact, in order to ensure that the flat seal works effectively, it is necessary that it rests on a adequately flat surface of the connection, in such a manner that the seal during tightening does not become deformed in an incorrect manner and is subjected to correct compression work so as to exert the hydraulic seal function. The fitting seats of the connections in many cases do not provide a flat resting surface as disclosed above, this clearly resulting into a limitation to the assembly versatility of the valve. Further, owing to the high operating pressure of the plant, the gasket may be radially expelled from its seat, thus compromising the seal of the plant. Another type of prior art sealing gasket is known from DE 2 230 740 A1.

### OBJECTS OF THE INVENTION

The object of the present invention is to provide a seal coupling system for valve for thermal plants of the type specified above that is particularly effective in acting as a fluid seal and which enables a high degree of valve assembly versatility to be achieved, thus simplifying assembly operations thereof and reducing the costs thereof as well.

### SHORT DESCRIPTION OF THE INVENTION

The above can be achieved by a seal coupling system for valve in accordance with claim 1.

### SHORT DESCRIPTION OF THE DRAWINGS

These and further features according to the present invention, will be clearer from the following description with reference to the attached drawings, in which:

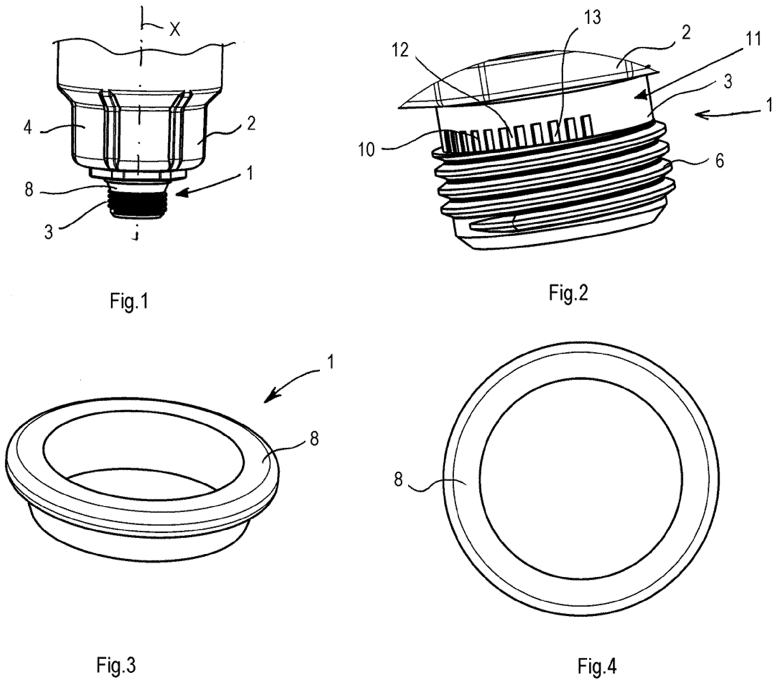

Figure 1 is a fragmentary view that shows part of a valve provided with a coupling system according to the invention, in which a coupling portion of the body of the valve is shown on which the annular sealing gasket element according to the invention is housed;
Figure 2 is an enlarged detail of figure 1, showing the coupling system without the annular sealing gasket element according to the invention;
Figures 3 and 4 are respectively a perspective view and a top view of a first embodiment of the annular sealing gasket element;

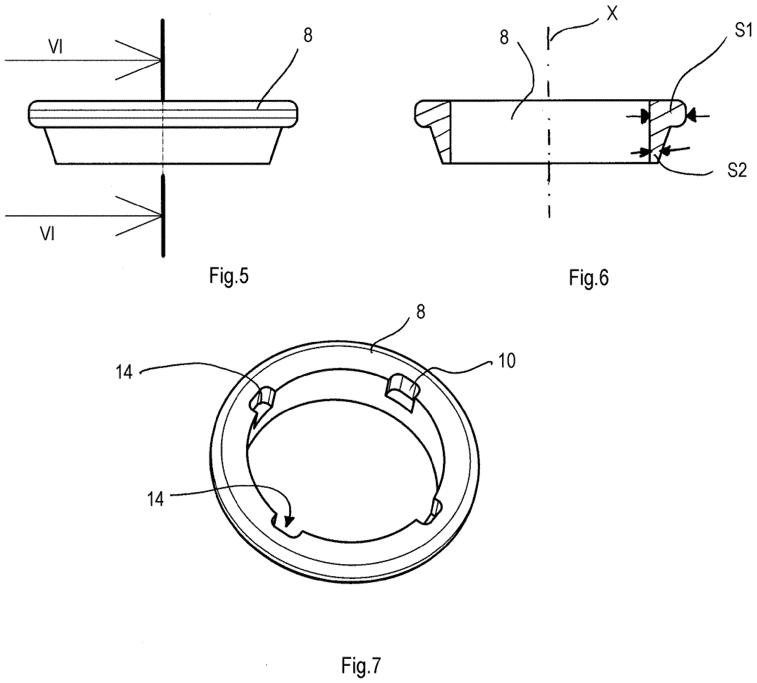

Figure 5 is a side view of the annular sealing gasket element;
Figure 6 is a section taken along the plane VI-VI of figure 5;
Figure 7 is a perspective view of a second embodiment of the annular sealing gasket element;
Figure 8 shows, in a longitudinal section, part of a valve provided with the coupling system according to the invention;
Figure 8A is an enlarged detail of figure 8, better showing the coupling system including the annular sealing gasket element according to the invention in a configuration before mounting of the valve on a thermal plant;
Figure 9 is a section taken along the plane IX-IX of figure 8A.
Figure 9A is an enlarged detail of figure 9;
Figure 10 shows the coupling system in a work configuration, wherein the valve is mounted on the thermal plant;
Figure 11 is a partial section view, according to plane XI-XI in figure 10, which shows the annular sealing gasket element in the work configuration.

### DETAILED DESCRIPTION OF THE INVENTION

The general features of the present invention will be illustrated here below through some embodiments provided by way of non-limiting example.

With reference to the attached drawings, there is described a seal coupling system 1 for a valve 2 that is intended for a thermal hydraulic plant, in particular an air vent valve, or a safety relief valve for a heating plant, or others types of valve.

The valve 2 comprises a cup body 4 in the bottom zone of which a coupling portion 3 is obtained that is part of the coupling system 1 according to the present invention. The coupling system 1 enables effective fluid seal coupling of the valve 2 with a connection of the heating plant, in particular on a fitting seat 5 obtained on the connection.

The coupling portion 3 projects from the aforesaid body 4 of the valve 2 along a longitudinal axis X, and is provided with a first thread 6 suitable for engaging with a second thread 7 of the fitting seat 5.

The coupling system 1 comprises an annular sealing gasket element 8 that is positioned on a housing seat 11 of the coupling portion 3.

The housing seat 11 is cylindrical and extends between an abutting surface 16 that is transverse to the longitudinal axis X, and the first thread 6.

The annular sealing gasket element 8 has a cross section, considered according to a plane passing through the longitudinal axis X, that has a zone of greater thickness S1, the thickness being measured orthogonally to the longitudinal axis (X), and a zone of lesser thickness S2. The zone of lesser thickness S2 is configured for penetrating and being tightened between the second thread 7 and a surface 17 of said coupling portion 3 when the coupling portion 3 is screwed on to the fitting seat 5.

The zone of lesser thickness S2 of the annular sealing gasket element 8 has a cross section having a rectangular trapezium shape with a greater base adjacent to the zone of greater thickness S1 and a smaller base further from the zone of greater thickness S1, i.e. during operation, near the first thread.

The rectangular trapezium of the aforesaid section has the more internal side that is parallel to the longitudinal axis X and a more external side that is tilted and converges towards the longitudinal axis X as from the zone of greater thickness S1 it approaches the first thread 6.

In another possible embodiment, the zone of lesser thickness S2 has a cross section with a right-angled triangle shape having a base adjacent to the zone of greater thickness S1, a more internal side parallel to the longitudinal axis X and a more external side that tilts and converges towards the longitudinal axis X according to a direction that goes from said zone of greater thickness S1 to the first thread 6.

The annular sealing gasket element 8 is made of a deformable material that is such as to enable part thereof to be deformed and blocked between the second thread 7 and the external cylindrical surface 17 of the coupling portion 3.

In particular, the annular seal element 8 is made of an elastomeric material.

Owing to the particular geometrical configuration of the aforesaid annular sealing gasket element 8, a highly effective seal coupling can be obtained whatever the geometry of the fitting seat 5. In other words, owing to the configuration of the sealing gasket element 8, it is not necessary to have particular opportunely shaped resting surfaces or seats on the connecting seat, as it is on the other hand required in traditional systems that use "O-rings" or flat seals. This significantly simplifies the requirements for fitting valves, also reducing the fitting costs thereof.

The seal coupling system 1 further comprises constraining means 10 configured for preventing a relative rotation of the annular sealing gasket element 8 with respect to the coupling portion 3 during screwing on the fitting seat 5 of the piping.

The constraining means comprises protrusions 12 or teeth 12, or extrusions, obtained along at least part of the housing seat 11. They may additionally be obtained in the internal diameter of the annular sealing gasket element 8. In particular a plurality of protrusions 12 is provided that protrude from the housing seat 11 to the exterior transversely, in particular orthogonally, to the longitudinal axis X, i.e. radially.

The protrusions 12 are distributed around the longitudinal axis X for at least one angular portion along the housing seat 11.

Alternatively, or in combination with the protrusions 12, the constraining means 10 may comprise notches 13 obtained on the housing seat 11. The notches 13 are distributed circumferally for at least a portion of a 360-degree angle on the housing seat 11.

When the coupling portion 3 is screwed on the fitting seat 5, the annular sealing gasket element 8, starting to become deformed through the effect of the tightening, couples with the protrusions 12 that prevent it from rotating in relation to the coupling portion 2, thus being forced to rotate integrally therewith.

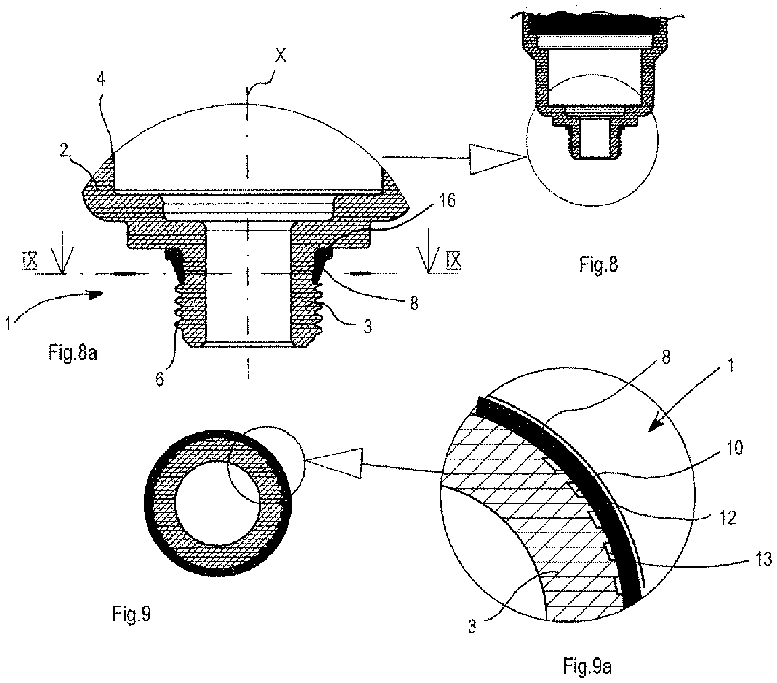

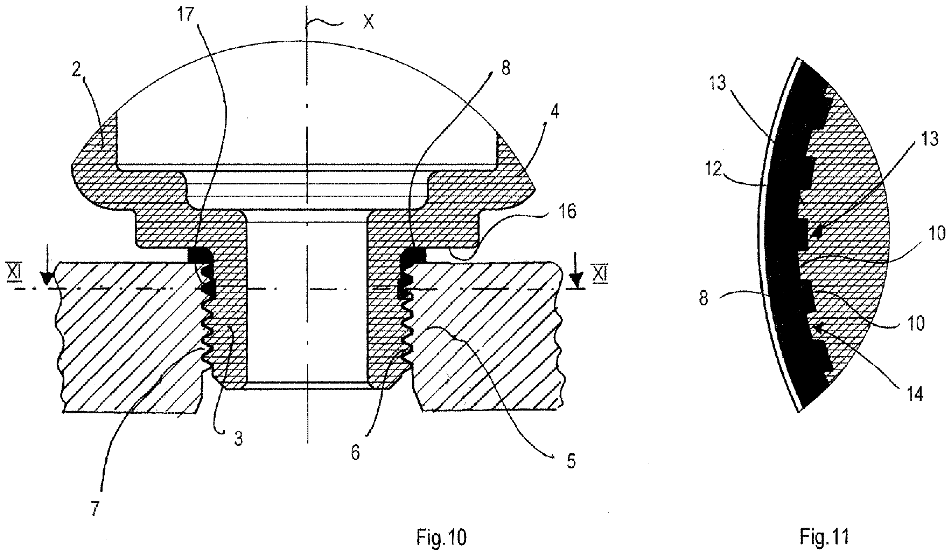

The variation in the shape of the annular sealing gasket element 8 is clearly visible from a comparison of figures 9A and 11. The rotation constraint between the annular sealing gasket element 8 and the coupling portion 3 forces the zone of lesser thickness S2 to penetrate the second thread 7 during progressive tightening, thus being immobilised, as visible in figure 10.

Owing to the synergy of the constraining means 10 and of the particular cross section profile of the annular sealing gasket element 8 high coupling system 1 performance is obtained.

A very effective fluid seal is obtained that is more effective than traditional seal systems; further, stable anchoring of the annular sealing gasket element 8 is obtained, so that even if the annular sealing gasket element 8 is subjected to great fluid pressure it is able not to be ejected from the seat of the annular sealing gasket element 8.

In another embodiment, the constraining means comprise, in addition to the protrusions 12 obtained on the coupling portion 3, also cavities 14 distributed on a more internal zone of the annular sealing gasket element 8 and which are conformed for coupling with the aforesaid protrusions 12.

In a further possible embodiment, the constraining means 10 also comprise projecting means that protrudes from the annular sealing gasket element 8 and which are shaped for coupling with the recesses 13 obtained on the housing seat 11. In this case the rotatably integral coupling between the annular sealing gasket element 8 and the housing seat 11 takes effect even before the annular sealing gasket element 8 starts to be deformed by screwing.

From the above it is clear that the coupling system 1 according to the invention provides great and constant fluid seal efficacy and is highly versatile, being suitable for any type/geometry of threaded fitting provided on the piping of a thermal plant, with clear advantages from the point of view of costs and ease of fitting.

What has been said and shown with reference to the attached drawings, has been given merely by way of example and illustration of the general features of the invention and of some preferred embodiments thereof; thus other modifications to and variations to the seal coupling system are possible without thereby moving outside the scope of the claims.

It is possible to configure and dimension the coupling system 1, in particular the valve 2 that includes this system, in a desired manner according to the particular applications. Lastly, the materials used can be chosen according to need provided that they are suitable for the specific use for which they are intended.

## Claims

1. Seal coupling system for valve (2), said seal coupling system comprising:
- a coupling portion (3) protruding from a body (4) of said valve (2) along a longitudinal axis (X) and suitable for engaging with a fitting seat (5) obtained on a connection of a plant along which a fluid runs,
- said coupling portion (3) being provided with a first thread (6) suitable for engaging with a second thread (7) of said fitting seat (5),
- an annular sealing gasket element (8) positionable on said coupling portion (3),
- said coupling portion (3) comprising a zone on which there is obtained said first thread (6) and a further zone on which there is obtained a housing seat (11) shaped for housing said annular sealing gasket element (8), said housing seat (11) being cylindrical and extending between said first thread (6) and an abutting surface (16) transverse to said longitudinal axis (X),
**characterised in that**,
- said annular sealing gasket element (8) has a cross section, according to a plane passing through said longitudinal axis (X), that has a zone of greater thickness (S1), measured in a direction that is orthogonal to said longitudinal axis (X), and a zone of lesser thickness (S2) configured for penetrating, and being tightened, between said second thread (7) and an external cylindrical surface (17) of said coupling portion (3) when said coupling portion (3) is screwed on said fitting seat (5),
- wherein, in a non-deformed rest configuration, said cross section has in said zone of lesser thickness (S2) a tapered profile converging towards said longitudinal axis (X) according to a direction that points towards said first thread (6),
- constraining means (10) being further provided which are configured for preventing a relative rotation of said annular sealing gasket element (8) with respect to said coupling portion (3), said constraining means (10) comprising protruding means (12) and/or recess means (13) obtained on said cylindrical housing seat (11) and distributed around said longitudinal axis (X) for at least one angular portion, said protruding means (12) and/or recess means (13) being arranged for coupling with part of said annular sealing gasket element (8) in a work configuration in which said annular sealing gasket element (8) is deformed upon a tightening screwing of said coupling portion (3).

2. Seal coupling system according to claim 1, wherein said protruding means (12) protrudes from said housing seat (11) transversely with respect to said longitudinal axis (X).

3. Seal coupling system according to claim 2, wherein said protruding means comprise a plurality of protrusions (12) extending radially outside from said housing seat (11).

4. Seal coupling system according to any preceding claims, wherein said recess means comprises a plurality of recesses (13) distributed circumferally for at least one angular portion on said housing seat (11).

5. Seal coupling system according to any one of claims 1 to 3, wherein said constraining means comprises cavity means (14) obtained on said annular sealing gasket element (8) and shaped for coupling with said protruding means (12) of said housing seat (11).

6. Seal coupling system according to claim 4, wherein said constraining means (10) comprises projecting means projecting from said annular sealing gasket element (8) and shaped for coupling with said recess means (13) obtained on said housing seat (11).

7. Seal coupling system according to any preceding claims, wherein said zone of lesser thickness (S2) has a cross section having a rectangular trapezium shape with a greater base adjacent to said zone of greater thickness (S1) and a smaller base further from said zone of greater thickness (S1), said rectangular trapezium having a more internal side parallel to said longitudinal axis (X) and a more external side that tilts and converges towards said longitudinal axis (X) according to a direction that goes from said zone of greater thickness (S1) to said first thread (6).

8. Seal coupling system according to any preceding claims, wherein said zone of lesser thickness (S2) has a cross section having a right-angled triangle shape having a base adjacent to said zone of greater thickness (S1), a more internal side parallel to said longitudinal axis (X) and a more external side that tilts and converges towards said longitudinal axis (X) according to a direction that goes from said zone of greater thickness (S1) to said first thread (6).

9. Seal coupling system according to any preceding claim, wherein said annular sealing gasket element (8) is made of a deformable material that is such as to enable a part of said annular sealing gasket element (8) to be deformed and immobilised between said second thread (7) and said external cylindrical surface (17) of said coupling portion (3).

10. Air vent valve comprising a seal coupling system (1) according to any preceding claim.

11. Safety relief valve comprising a seal coupling system (1) according to any one of claims 1 to 10.

## Patentansprüche

1. Dichtungskopplungssystem für ein Ventil (2), wobei das Dichtungskopplungssystem
- einen Kopplungsabschnitt (3), der entlang einer Längsachse (X) von einem Körper (4) des Ventils (2) vorsteht und zum Eingriff mit einem Armatursitz (5), der an einem Anschluss einer Anlage, entlang der ein Fluid strömt, ausgeführt ist, geeignet ist,
- wobei der Kopplungsabschnitt (3) mit einem ersten Gewinde (6) versehen ist, das zum Eingriff mit einem zweiten Gewinde (7) des Armatursitzes (5) geeignet ist,
- ein ringförmiges Dichtungselement (8), das an dem Kopplungsabschnitt (3) positionierbar ist,
- wobei der Kopplungsabschnitt (3) eine Zone, an der das erste Gewinde (6) ausgeführt ist, und eine weitere Zone, an der ein Gehäusesitz (11), der zur Aufnahme des ringförmigen Dichtungselements (8) geformt ist, ausgeführt ist, umfasst, wobei der Gehäusesitz (11) zylinderförmig ist und sich zwischen dem ersten Gewinde (6) und einer quer zu der Längsachse (X) verlaufenden Anliegefläche (16) erstreckt,
umfasst, **dadurch gekennzeichnet, dass**
- das ringförmige Dichtungselement (8) einen Querschnitt in einer durch die Längsachse (X) verlaufenden Ebene aufweist, der eine Zone mit einer in einer orthogonal zu der Längsachse (X) verlaufenden Richtung gemessen größeren Dicke (S1) und eine Zone mit einer geringeren Dicke (S2), die dazu ausgelegt ist, zwischen das zweite Gewinde (7) und eine äußere zylinderförmige Fläche (17) des Kopplungsabschnitts (3) einzudringen und dazwischen festgezogen zu werden, wenn der Kopplungsabschnitt (3) auf den Armatursitz (5) geschraubt wird, aufweist.
- wobei der Querschnitt in einer nicht verformten Ruhekonfiguration in der Zone mit der geringeren Dicke (S2) ein konisches Profil aufweist, das in einer zu dem ersten Gewinde (6) weisenden Richtung zu der Längsachse (X) konvergiert,
- wobei ferner ein Beschränkungsmittel (10) bereitgestellt ist, das dazu ausgelegt ist, eine relative Drehung des ringförmigen Dichtungselements (8) in Bezug auf den Kopplungsabschnitt (3) zu verhindern, wobei das Beschränkungsmittel (10) ein vorstehendes Mittel (12) und/oder ein Aussparungsmittel (13) umfasst, das an dem zylinderförmigen Gehäusesitz (11) ausgeführt ist und über wenigstens einen Winkelabschnitt um die Längsachse (X) verteilt ist, wobei das vorstehende Mittel (12) und/oder das Aussparungsmittel (13) zur Kopplung mit einem Teil des ringförmigen Dichtungselements (8) in einer Arbeitskonfiguration, in der das ringförmige Dichtungselement (8) nach einem Festschrauben des Kopplungsabschnitts (3) verformt ist, eingerichtet ist.

2. Dichtungskopplungssystem nach Anspruch 1, wobei das vorstehende Mittel (12) in Bezug auf die Längsachse (X) quer von dem Gehäusesitz (11) vorsteht.

3. Dichtungskopplungssystem nach Anspruch 2, wobei das vorstehende Mittel mehrere Vorsprünge (12) umfasst, die sich von dem Gehäusesitz (11) radial nach außen erstrecken.

4. Dichtungskopplungssystem nach einem der vorhergehenden Ansprüche, wobei das Aussparungsmittel mehrere Aussparungen (13) umfasst, die in der Umfangsrichtung über wenigstens einen Winkelabschnitt an dem Gehäusesitz (11) verteilt sind.

5. Dichtungskopplungssystem nach einem der Ansprüche 1 bis 3, wobei das Beschränkungsmittel Hohlraummittel (14) umfasst, die an dem ringförmigen Dichtungselement (8) ausgeführt sind und zur Kopplung mit dem vorstehenden Mittel (12) des Gehäusesitzes (11) geformt sind.

6. Dichtungskopplungssystem nach Anspruch 4, wobei das Beschränkungsmittel (10) vorspringende Mittel umfasst, die von dem ringförmigen Dichtungselement (8) vorspringen und zur Kopplung mit dem an dem Gehäusesitz (11) ausgeführten Aussparungsmittel (13) geformt sind.

7. Dichtungskopplungssystem nach einem der vorhergehenden Ansprüche, wobei die Zone mit der geringeren Dicke (S2) einen Querschnitt mit der Form eines rechtwinkeligen Trapezes aufweist, wobei sich eine größere Basis neben der Zone mit der größeren Dicke (S1) befindet und eine kleinere Basis weiter von der Zone mit der größeren Dicke (S1) entfernt befindet, wobei das rechtwinkelige Trapez eine weiter innen befindliche Seite parallel zu der Längsachse (X) und eine weiter außen befindliche Seite, die sich neigt und in einer Richtung, die von der Zone mit der größeren Dicke (S1) zu dem ersten Gewinde (6) verläuft, zu der Längsachse (X) hin konvergiert, aufweist.

8. Dichtungskopplungssystem nach einem der vorhergehenden Ansprüche, wobei die Zone mit der geringeren Dicke (S2) einen Querschnitt mit der Form eines rechtwinkeligen Dreiecks aufweist, das eine Basis neben der Zone mit der größeren Dicke (S1), eine weiter innen befindliche Seite parallel zu der Längsachse (X) und eine weiter außen befindliche Seite, die sich neigt und in einer Richtung, die von der Zone mit der größeren Dicke (S1) zu dem ersten Gewinde (6) verläuft, zu der Längsachse (X) hin konvergiert, aufweist.

9. Dichtungskopplungssystem nach einem der vorhergehenden Ansprüche, wobei das ringförmige Dichtungselement (8) aus einem verformbaren Material besteht, das derart ist, dass eine Verformung und Immobilisierung eines Teils des ringförmigen Dichtungselements (8) zwischen dem zweiten Gewinde (7) und der äußeren zylinderförmigen Fläche (17) des Kopplungsabschnitts (3) ermöglicht wird.

10. Entlüftungsventil, umfassend ein Dichtungskopplungssystem (1) nach einem der vorhergehenden Ansprüche.

11. Sicherheitsventil, umfassend ein Dichtungskopplungssystem (1) nach einem der Ansprüche 1 bis 10.

## Revendications

1. Système d'accouplement pour soupape (2) procurant un joint d'étanchéité, ledit système d'accouplement procurant un joint d'étanchéité comprenant :
- une portion d'accouplement (3) faisant saillie par rapport à un corps (4) de ladite soupape (2) le long d'un axe longitudinal (X) et appropriée pour venir s'engrener avec un siège de montage (5) obtenu sur un raccord d'une installation le long de laquelle s'écoule un fluide ;
- ladite portion d'accouplement (3) étant munie d'un premier filet de vis (6) approprié pour venir s'engrener avec un second filet de vis (7) dudit siège de montage (5) ;
- un élément annulaire (8) sous la forme d'un joint statique procurant une étanchéité qui peut venir se disposer sur ladite portion d'accouplement (3) ;
- ladite portion d'accouplement (3) comprenant une zone sur laquelle est obtenu ledit premier filet de vis (6) et une zone supplémentaire sur laquelle est obtenu un siège de logement (11) configuré pour que vienne s'y loger ledit élément annulaire (8) sous la forme d'un joint statique procurant une étanchéité, ledit siège de logement (11) étant cylindrique et s'étendant entre ledit premier filet de vis (6) et une surface adjacente (16) transversale par rapport audit axe longitudinal (X) ;
**caractérisé en ce que**
- ledit élément annulaire (8) sous la forme d'un joint statique procurant une étanchéité possède une section transversale, conformément à un plan qui passe par ledit axe longitudinal (X), qui possède une zone d'épaisseur supérieure (S1), mesurée dans une direction qui est orthogonale par rapport audit axe longitudinal (X), et une zone d'épaisseur inférieure (S2) configurée pour pénétrer et être enserrée entre ledit second filet de vis (7) et une surface cylindrique externe (17) de ladite portion d'accouplement (3) lorsque ladite portion d'accouplement (3) est vissée sur ledit siège de montage (5) ;
- dans lequel, dans une configuration de repos non déformée, ladite section transversale possède, dans ladite zone d'épaisseur inférieure (S2), un profil tronconique convergeant en direction dudit axe longitudinal (X) conformément à une direction qui pointe en direction dudit premier filet de vis (6) ;
- des moyens de restriction (10) étant en outre prévus, qui sont configurés pour empêcher une rotation relative dudit élément annulaire (8) sous la forme d'un joint statique procurant une étanchéité par rapport à ladite portion d'accouplement (3), lesdits moyens de contrainte (10) comprenant des moyens faisant saillie (12) et/ou des moyens sous la forme d'évidements (13) obtenus sur ledit siège de logement cylindrique (11) et distribués autour dudit axe longitudinal (X) sur au moins une portion angulaire, lesdits moyens faisant saillie (12) et/ou lesdits moyens sous la forme d'évidements (13) étant disposés pour s'accoupler avec une partie dudit élément annulaire (8) sous la forme d'un joint statique procurant une étanchéité dans une configuration de travail dans laquelle ledit élément annulaire (8) sous la forme d'un joint statique procurant une étanchéité est déformé lors d'un vissage par serrage de ladite portion d'accouplement (3).

2. Système d'accouplement procurant un joint d'étanchéité selon la revendication 1, dans lequel lesdits moyens faisant saillie (12) font saillie par rapport audit siège de logement (11) en direction transversale par rapport audit axe longitudinal (X).

3. Système d'accouplement procurant un joint d'étanchéité selon la revendication 2, dans lequel lesdits moyens faisant saillie comprennent plusieurs saillies (12) s'étendant en direction radiale à l'extérieur dudit siège de logement (11).

4. Système d'accouplement procurant un joint d'étanchéité selon l'une quelconque des revendications précédentes, dans lequel lesdits moyens sous la forme d'évidements comprennent plusieurs évidements (13) distribués en direction circonférentielle sur au moins une portion angulaire dudit siège de logement (11).

5. Système d'accouplement procurant un joint d'étanchéité selon l'une quelconque des revendications 1 à 3, dans lequel lesdits moyens de contrainte comprennent des moyens (14) sous la forme de cavités obtenus sur ledit élément annulaire (8) sous la forme d'un joint statique procurant une étanchéité et configurés pour s'accoupler avec lesdites moyens faisant saillie (12) dudit siège de logement (11).

6. Système d'accouplement procurant un joint d'étanchéité selon la revendication 4, dans lequel lesdits moyens de contrainte (10) comprennent des moyens faisant saillie par rapport audit élément annulaire (8) sous la forme d'un joint statique procurant une étanchéité et configurés pour s'accoupler avec lesdits moyens (13) sous la forme d'évidements obtenus sur ledit siège de logement (11).

7. Système d'accouplement procurant un joint d'étanchéité selon l'une quelconque des revendications précédentes, dans lequel ladite zone d'épaisseur inférieure (S2) possède une section transversale possédant une configuration en forme de trapèze rectangulaire comprenant une grande base adjacente à ladite zone d'épaisseur supérieure (S1) et une petite base plus éloignée de ladite zone d'épaisseur supérieure (S1), ledit trapèze rectangulaire possédant un côté plus interne parallèle audit axe longitudinal (X) et un côté plus externe qui est incliné et qui converge en direction dudit axe longitudinal (X) conformément à une direction qui s'étend depuis ladite zone d'épaisseur supérieure (S1) jusqu'audit premier filet de vis (6).

8. Système d'accouplement procurant un joint d'étanchéité selon l'une quelconque des revendications précédentes, dans lequel ladite zone d'épaisseur inférieure (S2) possède une section transversale possédant une configuration en forme de triangle rectangle possédant une base adjacente à ladite zone d'épaisseur supérieure (S1), un côté plus interne parallèle audit axe longitudinal (X) et un côté plus externe qui est incliné et qui converge en direction dudit axe longitudinal (X) conformément à une direction qui s'étend depuis ladite zone d'épaisseur supérieure (S1) jusqu'audit premier filet de vis (6).

9. Système d'accouplement procurant un joint d'étanchéité selon l'une quelconque des revendications précédentes, dans lequel ledit élément annulaire (8) sous la forme d'un joint statique procurant une étanchéité est réalisé à partir d'un matériau déformable tel qu'il permet la déformation d'une partie dudit élément annulaire (8) sous la forme d'un joint statique procurant une étanchéité et son immobilisation entre ledit second filet de vis (7) et ladite surface cylindrique externe (17) de ladite portion d'accouplement (3).

10. Soupape d'aération comprenant un système d'accouplement procurant un joint d'étanchéité (1) selon l'une quelconque des revendications précédentes.

11. Soupape de sûreté-décharge comprenant un système d'accouplement procurant un joint d'étanchéité (1) selon l'une quelconque des revendications 1 à 10.
